# EUROPEAN PATENT APPLICATION

(11) **EP 4 676 013 A1**
(43) Date of publication of application: **07.01.2026**
(21) Application number: 24884094.4
(22) Date of filing: 06.08.2024
(51) Int. Cl.: H04M 1/03, H04R 19/04

(54) **ELECTRONIC DEVICE**

(30) Priority: 30.10.2023 CN 202311428260
(71) Applicant: Honor Device Co., Ltd., Shenzhen, Guangdong 518040 (CN)
(72) Inventor: HU, Nan, Shenzhen, Guangdong 518040 (CN); YANG, Yongzhou, Shenzhen, Guangdong 518040 (CN); CHENG, Luxun, Shenzhen, Guangdong 518040 (CN); HUO, Guoliang, Shenzhen, Guangdong 518040 (CN)
(74) Representative: Isarpatent
(86) International application number: PCT/CN2024/110214
(87) International publication number: WO 2025/092087

(57) **Abstract**

This application provides an electronic device, and relates to the technical field of electronic devices, so that the electronic device can be thinned, and an outer end opening of a sound pickup channel can be centrally disposed. The electronic device includes a screen, a middle frame, the sound pickup channel, and a microphone. The screen includes a display surface. Both the middle frame and the sound pickup channel are disposed on a side that is of the screen and that faces away from the display surface. The sound pickup channel includes a first channel segment and a second channel segment. A first end of the first channel segment is located on an outer side surface of the middle frame, the first channel segment extends toward a middle part of the middle frame from the first end to a second end of the first channel segment, and the second end is closer to the screen than the first end in a direction perpendicular to the screen. A third end of the second channel segment is connected to the second end, the second channel segment extends in a direction away from the screen from the third end to a fourth end of the second channel segment, and the fourth end runs through a surface that is of the middle frame and that faces away from the screen. The microphone is located on a side that is of the middle frame and that faces away from the screen, the microphone has a sound pickup hole, and the sound pickup hole is communicated with the fourth end.

## Description

This application claims priority to Chinese Patent Application No. 202311428260.4, filed with the China National Intellectual Property Administration on October 30, 2023 and entitled "ELECTRONIC DEVICE", which is incorporated herein by reference in its entirety.

### TECHNICAL FIELD

This application relates to the technical field of electronic devices, and in particular, to an electronic device with a sound pickup function.

### BACKGROUND

Currently, a microphone (microphone, MIC) is generally disposed in a housing of an electronic device such as a mobile phone or a tablet computer, and a sound pickup channel communicated with an inner side and an outer side of the housing is disposed on the housing. A sound pickup hole of the MIC is communicated with the sound pickup channel, so that a sound signal from an external environment can enter the MIC through the sound pickup channel to implement sound pickup.

In order to improve a hand feel and an appearance of the electronic device, the electronic device is required to be made thinner, and an opening that is of the sound pickup channel and that is communicated with the outside of the housing is generally disposed on an outer side surface of the housing. The opening is required to be centrally arranged on the outer side surface in a thickness direction of the electronic device. However, in the conventional technology, the two requirements cannot be both met.

### SUMMARY

This application provides an electronic device, so that an outer end opening of a sound pickup channel can be centrally disposed in a thickness direction of the electronic device while the electronic device is thinned.

To achieve the foregoing objectives, this application provides an electronic device. The electronic device includes a screen, a middle frame, a sound pickup channel, and a microphone.

The screen includes a display surface, and both the middle frame and the sound pickup channel are disposed on a side that is of the screen and that faces away from the display surface.

The sound pickup channel includes a first channel segment and a second channel segment. Two ends of the first channel segment are respectively a first end and a second end, the first end is located on an outer side surface of the middle frame, the first channel segment extends toward a middle part of the middle frame from the first end to the second end, and the second end is closer to the screen than the first end in a direction perpendicular to the screen. Two ends of the second channel segment are respectively a third end and a fourth end, the third end is connected to the second end, the second channel segment extends in a direction away from the screen from the third end to the fourth end, and the fourth end runs through a surface that is of the middle frame and that faces away from the screen.

The microphone is located on a side that is of the middle frame and that faces away from the screen, the microphone has a sound pickup hole, and the sound pickup hole is communicated with the fourth end.

In this way, a sound signal outside the electronic device can enter the microphone through the sound pickup channel, to be picked up by the microphone. The second end is closer to the screen than the first end, and the third end of the second channel segment is connected to the second end. In this way, the second channel segment can be closer to the screen while it is ensured that an outer end opening of the sound pickup channel is centrally arranged on an outer side surface in a thickness direction of the electronic device; and a thickness of the middle frame can be reduced on the premise that a length of the second channel segment in the thickness direction of the electronic device is constant, to facilitate thinning of the electronic device. Therefore, thinning of the electronic device can be implemented while the outer end opening is centrally disposed.

Optionally, the middle frame may be a metal middle frame, and a material of the metal middle frame does not include but is not limited to stainless steel, aluminum alloy, magnesium alloy, and titanium alloy. A metal material has large hardness, so that structural strength of the middle frame and even the electronic device can be ensured on the premise that the middle frame is thinned, to prevent deformation.

Optionally, the first channel segment approaches the screen from the first end to the second end. In this way, the first channel segment is short, so that a peak frequency of the microphone can be increased, an operating frequency band of the microphone can be improved, and high-frequency performance of the microphone can be enhanced. In addition, the first channel segment has a simpler structure and is more convenient to process.

Optionally, the first channel segment includes a first straight channel segment and a second straight channel segment. The first straight channel segment extends from the outer side surface of the middle frame toward the middle part of the middle frame and is inclined toward the screen, and the second straight channel segment is connected between an end that is of the first straight channel segment and that faces the screen and the third end. The second straight channel segment is parallel to the screen; or the second straight channel segment is inclined toward the screen from the first straight channel segment to the second channel segment, and an inclination angle of the second straight channel segment relative to the screen is less than an inclination angle of the first straight channel segment relative to the screen. In this way, from the first end to the second end, the first channel segment is in an arched state in a direction away from a corner position of a surface that is of a middle plate and that faces away from the screen, thereby increasing a distance between the first channel segment and the corner position, so that a forming yield of the first channel segment can be ensured, and the thickness of the middle frame does not need to be increased, thereby facilitating thinning of the middle frame and even the electronic device, and ensuring an accommodating capacity of an accommodating cavity.

Optionally, the first straight channel segment, the second straight channel segment, and the second channel segment are all disposed in the middle frame. This structure is simple and has a proper layout.

On the basis of the foregoing, optionally, the middle frame includes the middle plate and a frame disposed on an edge of the middle plate, and a surface that is of the frame and that faces away from the middle plate forms the outer side surface. In the direction perpendicular to the screen, a distance from a surface that is of the frame and that faces away from the screen to the screen is greater than a distance from the surface that is of the middle plate and that faces away from the screen to the screen. The first straight channel segment is disposed in the frame, and at least a part of the second straight channel segment and the second channel segment are disposed in the middle plate. Specifically, one part of the second straight channel part is disposed in the middle plate, and the other part is located in the frame. This layout is proper and easy to implement.

Optionally, the first straight channel segment is disposed in the middle frame, and the end that is of the first straight channel segment and that faces the screen runs through a surface that is of the middle frame and that faces the screen. The second channel segment is disposed in the middle frame, and the third end of the second channel segment runs through the surface that is of the middle frame and that faces the screen. The electronic device further includes a sealing ring. The sealing ring is disposed between the screen and the middle frame, and a region surrounded by the sealing ring forms the second straight channel segment. In this way, the thickness of the middle frame can be further reduced on the premise that the length of the second channel segment in the thickness direction of the electronic device is constant, to facilitate thinning of the electronic device.

Optionally, the first channel segment includes a first straight channel segment, a second straight channel segment, and a third straight channel segment. The first straight channel segment extends from the outer side surface of the middle frame toward the middle part of the middle frame. The third straight channel segment extends from an end that is of the first straight channel segment and that faces the middle part of the middle frame toward the screen. The second straight channel segment extends from an end that is of the third straight channel segment and that faces the screen toward the middle part of the middle frame. In this way, the first channel segment approaches the screen in a step-wise manner from the first end to the second end, so that the distance between the first channel segment and the corner position can also be increased on the premise of ensuring that a thickness of the middle plate is constant, thereby ensuring a forming yield of the first channel segment.

Optionally, the first straight channel segment, the second straight channel segment, the third straight channel segment, and the second channel segment are all disposed in the middle frame. This structure is simple and has a proper layout.

Optionally, the first straight channel segment and the third straight channel segment are disposed in the middle frame, and the end that is of the third straight channel segment and that faces the screen runs through a surface that is of the middle frame and that faces the screen. The second channel segment is disposed in the middle frame, and the third end of the second channel segment runs through the surface that is of the middle frame and that faces the screen. The electronic device further includes a sealing ring. The sealing ring is disposed between the screen and the middle frame, and a region surrounded by the sealing ring forms the second straight channel segment. In this way, the thickness of the middle frame can be further reduced on the premise that the length of the second channel segment in the thickness direction of the electronic device is constant, to facilitate thinning of the electronic device.

Optionally, the second straight channel segment runs through a surface that is of the middle frame and that faces the screen, to form an opening, and the screen covers the opening. In this way, the screen forms a side wall of the second straight channel segment, so that the thickness of the middle plate can be further reduced on the premise of ensuring a height of the second straight channel segment in the thickness direction of the electronic device and the distance from the first channel segment to the corner position, to facilitate thinning of the middle frame and even the electronic device.

Optionally, a sealing ring is disposed between the screen and the middle frame, and the sealing ring is disposed around the opening. In this way, air tightness of the second straight channel segment can be ensured by using the sealing ring.

Optionally, both the first channel segment and the second channel segment are disposed in the middle frame. The first channel segment extends along a straight line, and the first channel segment is inclined toward the screen from the first end to the second end. In this way, the first channel segment continuously approaches the screen from the first end to the second end, so that the sound pickup channel has a simple shape and is easy to process. In addition, the first channel segment is as short as possible, so that a peak frequency of the microphone can be increased, an operating frequency band of the microphone can be improved, and high-frequency performance of the microphone can be enhanced.

Optionally, the electronic device further includes a circuit board. The circuit board is located on the side that is of the middle frame and that faces away from the screen, a first through hole is disposed in the circuit board, and the first through hole is opposite to and communicated with the fourth end. The microphone is disposed on the circuit board, and the sound pickup hole of the microphone is communicated with the first through hole. In this way, the microphone can be conveniently electrically connected to another electronic component such as a controller or a memory by using the circuit board. Based on this, the first through hole is disposed in the circuit board, the first through hole is made to be opposite to and communicated with the fourth end, and the sound pickup hole is made to be communicated with the first through hole. This layout is proper, and can improve layout compactness of electronic components in the electronic device.

Optionally, a dustproof mesh is disposed between the middle frame and the circuit board, the dustproof mesh includes a mesh body, and at least a part of the mesh body is located between the fourth end and the first through hole. In this way, a foreign object outside the electronic device can be prevented, by using the dustproof mesh, from entering the microphone along the sound pickup channel, thereby ensuring performance of the microphone and prolonging a life span.

Optionally, the mesh body includes a middle part and an edge part surrounding the middle part, and the middle part is located between the fourth end and the first through hole. The dustproof mesh further includes a first sealant layer, a second sealant layer, and an elastic sealing layer. The first sealant layer is bonded between the edge part and the middle frame. The second sealant layer is bonded between the edge part and the elastic sealing layer. The elastic sealing layer is located between the second sealant layer and the circuit board. Based on this, the circuit board can be fastened to the middle frame by using a connector such as a screw, to squeeze the elastic sealing layer and make the elastic sealing layer in a compressed state, so as to implement sealing and ensure air tightness at the dustproof mesh.

Optionally, a second through hole is further disposed in the circuit board, and the second through hole is spaced apart from the first through hole; and the microphone and the second channel segment are located on a same side of the circuit board, and the sound pickup hole of the microphone is opposite to and communicated with the second through hole. The electronic device further includes a sealing hood. The sealing hood is located on a side that is of the circuit board and that faces away from the microphone and the second channel segment, the sealing hood and the circuit board enclose an air flow cavity, and the air flow cavity is communicated with both the first through hole and the second through hole. In this way, the first through hole, the air flow cavity, and the second through hole form a U-shaped channel connected between the sound pickup channel and the sound pickup hole, so that a sound signal outside the electronic device can be transmitted to the microphone through the sound pickup channel and the U-shaped channel in sequence, and the sound signal is further converted into an electrical signal by using the microphone. In addition, a height of the sealing hood may be less than a height of the microphone in a direction perpendicular to the circuit board, to help reduce a stacking thickness of a complete machine, thereby implementing thinning of the electronic device. In addition, because the microphone and the second channel segment are located on the same side of the circuit board, the second channel segment is disposed on the middle plate, and a back cover and the middle plate are respectively located on two opposite sides of the circuit board, the microphone and the back cover are respectively located on the two opposite sides of the circuit board. Therefore, the microphone can be protected by using the circuit board, to prevent the microphone from being damaged by an external force from the back cover, thereby eliminating a need to specially dispose a protective cover for the microphone.

Optionally, an avoidance groove is disposed on the surface that is of the middle frame and that faces away from the screen, and the microphone is accommodated in the avoidance groove. In this way, the avoidance groove is disposed, so that the circuit board can be closer to the middle frame, and thickness superposition of the microphone and the middle frame is avoided, to reduce a thickness of the electronic device, thereby helping improve portability and a use hand feel of the electronic device.

Optionally, a cross-sectional area of the first through hole is greater than a cross-sectional area of the second through hole. In this way, after entering the accommodating cavity through the sound pickup channel, a sound signal can smoothly enter the air flow cavity through the first through hole, and enter the sound pickup hole through the second through hole. Because a cross-sectional area of the sound pickup hole is small, the cross-sectional area of the second through hole opposite to the sound pickup hole is small. Therefore, a contact area between the circuit board and a substrate of the microphone can be increased to ensure support stability. This layout is proper and has good performance.

Optionally, the height of the sealing hood is less than the height of the microphone in the direction perpendicular to the circuit board. In this way, a stacking height of electronic components located on a side that is of the middle plate and that faces away from the screen can be reduced, to help reduce the stacking thickness of the complete machine, thereby implementing thinning of the electronic device, and improving portability and a use hand feel of the electronic device.

Optionally, a material of the sealing hood is metal. Specifically, the metal includes but is not limited to iron, iron alloy, copper, copper alloy, aluminum, or aluminum alloy. The metal has large hardness, so that a wall thickness of the sealing hood can be reduced on the premise of ensuring structural strength of the sealing hood, to help increase a height of the air flow cavity while reducing the height of the sealing hood.

Optionally, the sealing hood includes a top plate, a side plate, and an annular bottom plate. The side plate is disposed along an edge periphery of the top plate, the annular bottom plate is connected to an end that is of the side plate and that is away from the top plate, and the annular bottom plate is connected to the circuit board. In this way, the sealing hood is approximately of a cylindrical-housing-shaped structure, and the structure is simple. In addition, large space can be formed inside the sealing hood on the premise that the height of the sealing hood in the thickness direction of the electronic device is constant to ensure a volume of the air flow cavity and increase the peak frequency of the microphone when the sealing hood is applied to the electronic device.

Optionally, the annular bottom plate includes an inner edge, and the end that is of the side plate and that is away from the top plate is located in a region surrounded by the annular bottom plate and is connected to the inner edge. The sealing hood has a simple structure and can be formed through stamping, to help simplify forming difficulty.

Optionally, an annular connecting pad is disposed on the circuit board, and the annular bottom plate is welded to the annular connecting pad. In this way, the sealing hood is fastened to the circuit board through welding, so that connection stability is high. In addition, a periphery of the annular bottom plate can be welded to a periphery of the annular connecting pad, so that sealing can be implemented to some extent.

Optionally, the annular bottom plate further includes an outer edge, a sealant is disposed on a side that is of the outer edge and that is away from the inner edge, and the sealant is bonded to both the outer edge and the circuit board.

Optionally, the side plate includes a first arcuate side plate, a second arcuate side plate, a first transition plate, and a second transition plate. The first arcuate side plate is located on a side that is of the first through hole and that is away from the second through hole and extends in a circumferential direction of the first through hole, the second arcuate side plate is located on a side that is of the second through hole and that is away from the first through hole and extends in a circumferential direction of the second through hole, and a radius of an arcuate inner wall surface of the first arcuate side plate is greater than a radius of an arcuate inner wall surface of the second arcuate side plate. Two ends of the first arcuate side plate in the circumferential direction of the first through hole are respectively a first end part and a second end part, and two ends of the second arcuate side plate in the circumferential direction of the second through hole are respectively a third end part and a fourth end part. The first transition plate is connected between the first end part and the third end part, and the second transition plate is connected between the second end part and the fourth end part. In this way, a shape of the sealing hood is approximately a spindle shape. Internal space at one end of a spindle-shaped structure is large, and internal space at the other end is small. The end with the large internal space is communicated with the first through hole with a large diameter, and the end with the small internal space is communicated with the second through hole with a small diameter. This layout is proper, and can help increase the peak frequency of the microphone while reducing a volume of the sealing hood.

Optionally, both the first transition plate and the second transition plate are flat plates, the first transition plate is tangent to the first end part of the first arcuate side plate and the third end part of the second arcuate side plate, and the second transition plate is tangent to the second end part of the first arcuate side plate and the fourth end part of the second arcuate side plate. In this way, the side plate has a simple structure and is easy to process, to help reduce costs. In addition there is a smooth transition between all positions in a circumferential direction of the internal air flow cavity, so that noise can be reduced.

Optionally, both the first through hole and the second through hole are circular holes. A center line corresponding to the first arcuate side plate is collinear with a center line of the first through hole, and a center line corresponding to the second arcuate side plate is collinear with a center line of the second through hole. In a radial direction of the first through hole, a distance between the arcuate inner wall surface of the first arcuate side plate and an inner wall surface of the first through hole is a first distance; and in a radial direction of the second through hole, a distance between the arcuate inner wall surface of the second arcuate side plate and an inner wall surface of the second through hole is a second distance. The second distance is equal to the first distance. In this way, this layout is proper, and can reduce, as much as possible, an area occupied by the sealing hood on the circuit board, to help reduce the volume of the air flow cavity in the sealing hood, thereby helping increase the peak frequency of the microphone.

Optionally, the electronic device is a foldable-screen device. In this way, a thickness of the foldable-screen device can be reduced while it is ensured that the outer end opening of the sound pickup channel is centrally disposed.

### BRIEF DESCRIPTION OF DRAWINGS

FIG. 1 is a three-dimensional view of an electronic device in an unfolded state according to some embodiments of this application;
FIG. 2 is a front view of the electronic device shown in FIG. 1 in a folded state;
FIG. 3 is a schematic diagram of a cross-sectional structure of the electronic device shown in FIG. 1 in a direction A-A;
FIG. 4 is a schematic diagram of a cross-sectional structure of an electronic device according to some other embodiments of this application;
FIG. 5 is a schematic diagram of a cross-sectional structure of an electronic device according to some other embodiments of this application;
FIG. 6 is a top view of a middle frame shown in FIG. 5;
FIG. 7 is a schematic diagram of a cross-sectional structure of an electronic device according to some other embodiments of this application;
FIG. 8 is a schematic diagram of a cross-sectional structure of an electronic device according to some other embodiments of this application;
FIG. 9 is a schematic diagram of a cross-sectional structure of an electronic device according to some other embodiments of this application;
FIG. 10 is a schematic diagram of a cross-sectional structure of an electronic device according to some other embodiments of this application;
FIG. 11 is a schematic diagram of a cross-sectional structure of an electronic device according to some other embodiments of this application;
FIG. 12 is a schematic diagram of a cross-sectional structure of a MIC in an electronic device according to some embodiments of this application;
FIG. 13 is a schematic diagram of a cross-sectional structure of an electronic device according to some other embodiments of this application;
FIG. 14 is a partial enlarged view of a region I in the electronic device shown in FIG. 13;
FIG. 15 is a schematic diagram of a cross-sectional structure of an electronic device according to some other embodiments of this application;
FIG. 16 is a schematic diagram of a cross-sectional structure of a sealing hood in the electronic device shown in FIG. 15;
FIG. 17 is a bottom view of a circuit board in the electronic device shown in FIG. 15;
FIG. 18 is a schematic diagram of a cross-sectional structure of a connection structure between a sealing hood and a circuit board in the electronic device shown in FIG. 15; and
FIG. 19 is a top view of a sealing hood in the electronic device shown in FIG. 15.

### Reference numerals:

100. Electronic device;
10. Screen; S0. Display surface; 20. Housing; 201. First housing; 202. Second housing; and 203. Rotating shaft mechanism;
A. Middle frame; A1. Middle plate; A2. Frame; L1. First edge; L2. Second edge; L3. Third edge; L4. Fourth edge; O. Geometric center; K1. First boundary line; K2. Second boundary line; K3. Third boundary line; K4. Fourth boundary line; A0. Middle part; m1. Outer side surface; m2. First surface; m3. Second surface; and m4. Third surface;
B. Back cover; and C. Accommodating cavity;
30. MIC; 30a. Sound pickup hole; 31. Casing; 32. Substrate; 33. Microphone chip; and 34. Integrated circuit;
40. Sound pickup channel; 40a. Outer end opening; 41. First channel segment; 411. First straight channel segment; 412. Second straight channel segment; 413. Third straight channel segment; 42. Second channel segment; D1. First end; D2. Second end; D3. Third end; and D4. Fourth end;
50. Protective cover;
60. Circuit board; 61. First through hole; and 62. Second through hole;
70. Dustproof mesh; 71. Mesh body; 71a. Middle part; 71b. Edge part; 72. First sealant layer; 73. Second sealant layer; and 74. Elastic sealing layer;
80. Sealing hood; 81. Top plate; 82. Side plate; 821. First arcuate side plate; x1. First end part; x2. Second end part; 822. Second arcuate side plate; x3. Third end part; x4. Fourth end part; 823. First transition plate; 824. Second transition plate; 83. Annular bottom plate; n1. Inner edge; n2. Outer edge; and K. Sealant; and
90. Air flow cavity.

### DESCRIPTION OF EMBODIMENTS

In the embodiments of this application, the terms "first", "second", "third", and "fourth" are used for descriptive purposes only, and cannot be construed as indicating or implying relative importance or implicitly indicating a quantity of indicated technical features. Therefore, features defined with "first", "second", "third", and "fourth" may explicitly or implicitly include one or more such features.

In the embodiments of this application, the term "include", "comprise", or any other variant thereof is intended to cover non-exclusive inclusion, so that a process, method, article, or apparatus that includes a series of elements not only includes those elements, but also includes other elements that are not explicitly listed, or includes elements inherent to such a process, method, article, or apparatus. Without further limitation, an element defined by the sentence "including a..." does not exclude existence of other identical elements in the process, method, article, or apparatus including the element.

In the embodiments of this application, unless otherwise specified, the description "parallel" indicates that approximately parallel within a specific error range is allowed, and the error range may be a range in which a deviation angle is less than or equal to 5° relative to absolutely parallel. The description "perpendicular" indicates that approximately perpendicular within a specific error range is allowed, and the error range may be a range in which a deviation angle is less than or equal to 5° relative to absolutely perpendicular. The description "collinear" indicates that approximately collinear within a specific error range is allowed, and the error range may be a range in which a deviation distance is less than 0.1 mm relative to absolutely collinear.

This application provides an electronic device. The electronic device is an electronic device with a sound pickup function. Specifically, the electronic device includes but is not limited to a mobile phone, a tablet computer, a notebook computer, a desktop computer, a large-screen display device, an onboard device, a smart wearable device, and the like. The smart wearable device includes but is not limited to a smartwatch, a band, smart glasses, smart clothes, and the like. The embodiments of this application are described by using an example in which the electronic device is a foldable-screen device. The foldable-screen device may be, for example, a foldable-screen mobile phone.

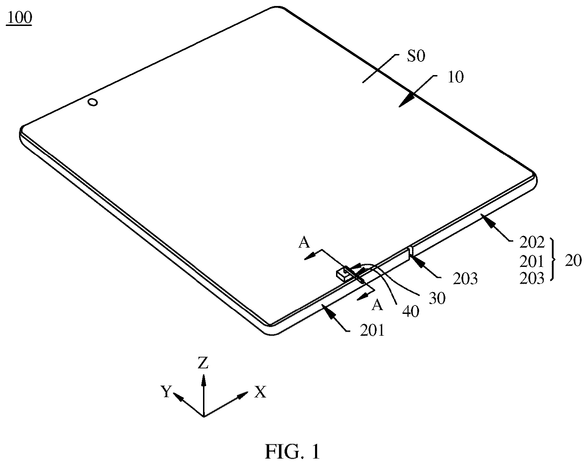

Referring to FIG. 1, FIG. 1 is a three-dimensional view of an electronic device 100 in an unfolded state according to some embodiments of this application. When the electronic device 100 is in the unfolded state, large-screen display can be implemented to provide a user with good visual experience.

The electronic device 100 is approximately in a shape of a rectangular flat plate in the unfolded state. Based on this, for ease of description in the following embodiments, an XYZ coordinate system is established for the electronic device 100 in the unfolded state, a length direction of the electronic device 100 is defined as an X-axis direction, a width direction of the electronic device 100 is defined as a Y-axis direction, and a thickness direction of the electronic device 100 is defined as a Z-axis direction. It may be understood that the coordinate system of the electronic device 100 may be flexibly set based on an actual requirement. This is not specifically limited herein. In some other embodiments, a shape of the electronic device 100 in the unfolded state may alternatively be a shape of a square flat plate, a circular flat plate, an oval flat plate, or the like.

Referring to FIG. 1, the electronic device 100 includes a screen 10 and a housing 20.

The screen 10 is configured to display information such as an image and a video. The screen 10 may be an organic light-emitting diode (organic light-emitting diode, OLED) screen, a micro organic light-emitting diode (micro organic light-emitting diode) screen, a quantum dot light emitting diode (quantum dot light emitting diode, QLED) screen, a liquid crystal display (liquid crystal display, LCD), or the like.

The screen 10 includes a display surface S0, and the user may view, through the display surface S0, an image or a video displayed on the screen 10.

The housing 20 is located on a side that is of the screen 10 and that faces away from the display surface S0, and is configured to carry the screen 10.

Still referring to FIG. 1, the housing 20 includes a first housing 201, a second housing 202, and a rotating shaft mechanism 203.

The first housing 201 is configured to carry a part of the screen 10, and the second housing 202 is configured to carry another part of the screen 10. The rotating shaft mechanism 203 is connected between the first housing 201 and the second housing 202, and is configured to implement relative rotation between the first housing 201 and the second housing 202, to support the screen 10 in being folded from the unfolded state shown in FIG. 1 to a folded state.

The first housing 201 may be rotated in a manner of facing away from the screen 10 (that is, folded outward) relative to the second housing 202 from the unfolded state shown in FIG. 1, to be folded to the folded state, or may be rotated in a manner of facing the screen 10 (that is, folded inward) relative to the second housing 202, to be folded to the folded state.

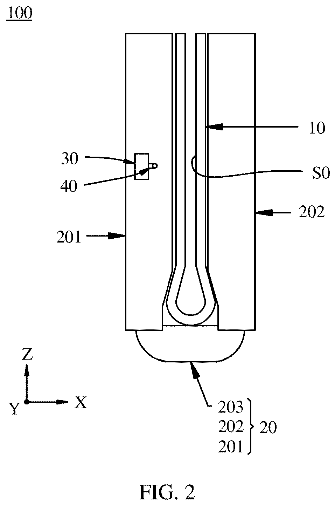

This application is described by using an example in which the first housing 201 is folded inward to the folded state relative to the second housing 202. Referring to FIG. 2, FIG. 2 is a front view of the electronic device 100 shown in FIG. 1 in a folded state.

When the electronic device is in the folded state, the first housing 201 and the second housing 202 are stacked, so that the electronic device is small in size and easy to carry.

The first housing 201 and the second housing 202 may each include a middle frame and a back cover. The screen 10 is carried on the middle frame, and the back cover is located on a side that is of the middle frame and that faces away from the screen 10. The back cover and the middle frame enclose an accommodating cavity, and the accommodating cavity is used to accommodate electronic components such as a microphone (microphone, MIC) 30, a battery, a vibration motor, a speaker module, and a camera module.

A back cover of the first housing 201 and a back cover of the second housing 202 may be physical back covers, or may be display screens. A display surface of the display screen may be opposite to the display surface S0 of the screen 10. In this way, when the electronic device is in the folded state, small-screen display can be implemented by using the display screen. Specifically, the display screen may be used for caller ID display, message reminder display, time, weather, date, and memo display, and the like.

In the foregoing embodiment, the MIC 30 may be disposed in the first housing 201, or may be disposed in the second housing 202. Referring to FIG. 1 and FIG. 2, this embodiment and the following embodiments are described by using an example in which the MIC 30 is disposed in the first housing 201. Based on this, for ease of description in the following embodiments, a middle frame of the first housing 201 is marked as a middle frame A, the back cover of the first housing 201 is marked as a back cover B, and an internal accommodating cavity of the first housing 201 is marked as an accommodating cavity C.

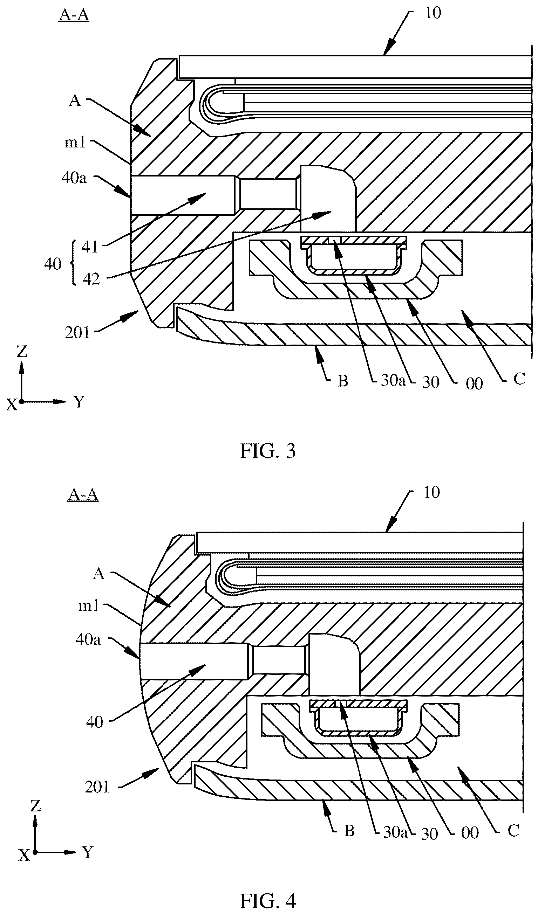

Referring to FIG. 3, FIG. 3 is a schematic diagram of a cross-sectional structure of the electronic device 100 shown in FIG. 1 in a direction A-A. A sound pickup channel 40 is disposed in the middle frame A, and a sound signal outside the electronic device 100 can enter the inside of the electronic device 100 through the sound pickup channel 40.

An opening at an end that is of the sound pickup channel 40 and that is connected to the outside of the electronic device 100 is an outer end opening 40a, and the outer end opening 40a is located on an outer side surface m1 of the middle frame A. The outer side surface m1 of the middle frame A is a surface that is of the middle frame A and that is away from the internal accommodating cavity C, and the outer side surface m1 is visible to the user.

In order to ensure that an appearance of the electronic device 100 is neat and beautiful, the outer end opening 40a is required to be centrally disposed on the outer side surface m1 in the Z-axis direction. In this way, it can be ensured that the appearance of the electronic device 100 is neat and beautiful, especially when the outer side surface m1 is an arc surface shown in FIG. 4, the user views the electronic device 100 from a display side of the electronic device 100, and the outer end opening 40a is invisible to the user. Therefore, it can be ensured that the appearance of the electronic device 100 is neat and beautiful. The display side of the electronic device 100 is a side that the display surface S0 of the screen 10 faces and a side that the display surface of the display screen faces.

On the basis of the foregoing, referring to FIG. 3 and FIG. 4, the MIC 30 is located on a side that is of the middle frame A and that faces away from the screen 10, and the MIC 30 is accommodated in the accommodating cavity C. The MIC 30 has a sound pickup hole 30a, and the sound pickup hole 30a is communicated with the sound pickup channel 40. In this way, the MIC 30 can pick up a sound signal from the sound pickup channel 40 to convert the sound signal into an electrical signal.

In order to prevent an impact force from the back cover B from affecting the MIC 30, referring to FIG. 3 and FIG. 4, the electronic device 100 further includes a protective cover 00. The protective cover 00 is disposed between the MIC 30 and the back cover B, and the protective cover 00 may be fastened to the middle frame A. In this way, the impact force from the back cover B first acts on the protective cover 00, and does not directly impact the MIC 30. Therefore, performance of the MIC 30 can be ensured, and a life span of the MIC 30 can be prolonged.

Still referring to FIG. 3 and FIG. 4, the sound pickup channel 40 extends along an L-shaped path. Specifically, the sound pickup channel 40 includes a first channel segment 41 and a second channel segment 42. The first channel segment 41 extends from the outer side surface m1 toward a middle part of the middle frame A in the Y-axis direction, and the second channel segment 42 extends from an end that is of the first channel segment 41 and that faces the middle part of the middle frame A toward a direction away from the screen 10 in the Z-axis direction. Based on this, a thickness of the electronic device 100 may be twice a sum of a radius of the first channel segment 41, a length of the second channel segment 42, a thickness of the MIC 30, a thickness of the protective cover 00, and a thickness of the back cover B on the premise of ensuring that the outer end opening 40a is centrally disposed on the outer side surface m1. This thickness is large, and does not facilitate thinning of the electronic device 100.

Therefore, thinning of the electronic device 100 cannot be implemented while the outer end opening is centrally disposed.

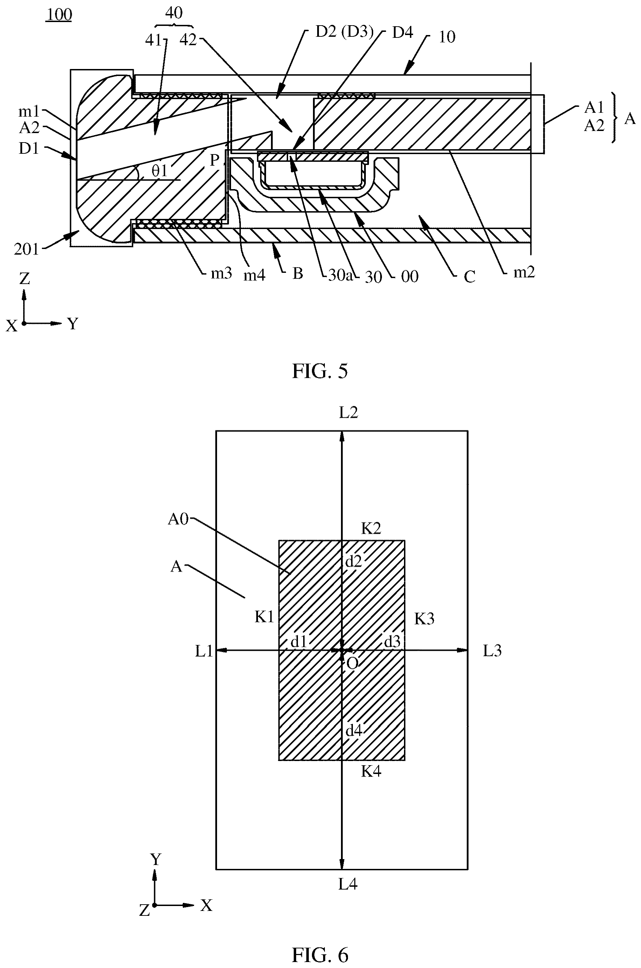

To resolve the foregoing problem, referring to FIG. 5, FIG. 5 is a schematic diagram of a cross-sectional structure of an electronic device 100 according to some other embodiments of this application. In this embodiment, a sound pickup channel 40 includes a first channel segment 41 and a second channel segment 42.

Two ends of the first channel segment 41 are respectively a first end D1 and a second end D2.

The first end D1 is located on an outer side surface m1 of a middle frame A to form an outer end opening of the sound pickup channel 40. In some embodiments, referring to FIG. 5, a geometric center of the opening at the first end D1 may be centrally disposed on the outer side surface m1 in a Z-axis direction. In this way, neatness of an appearance of the electronic device 100 can be improved.

The first channel segment 41 extends toward a middle part of the middle frame A from the first end D1 to the second end D2.

The middle part of the middle frame A is a part in which a geometric center of the middle frame A in an XY plane is located. The middle part of the middle frame A is specifically a part surrounded by boundaries formed after four edges of the middle frame A are moved by 1/2 times distances toward the geometric center of the middle frame A.

For example, referring to FIG. 6, FIG. 6 is a top view of the middle frame A shown in FIG. 5. The four edges of the middle frame A may include a first edge L1, a second edge L2, a third edge L3, and a fourth edge L4. In addition, the geometric center of the middle frame A in the XY plane is marked as O, a distance from the first edge L1 to the geometric center O is a first distance d1, a distance from the second edge L2 to the geometric center O is a second distance d2, a distance from the third edge L3 to the geometric center O is a third distance d3, and a distance from the fourth edge L4 to the geometric center O is a fourth distance d4. A first boundary line K1 is formed after the first edge L1 is moved by 1/2 times the first distance d1 toward the geometric center O; a second boundary line K2 is formed after the second edge L2 is moved by 1/2 times the second distance d2 toward the geometric center O; a third boundary line K3 is formed after the third edge L3 is moved by 1/2 times the third distance d3 toward the geometric center O; and a fourth boundary line K4 is formed after the fourth edge L4 is moved by 1/2 times the fourth distance d4 toward the geometric center O. Based on this, the middle part A0 of the middle frame A is a partial middle frame surrounded by the first boundary line K1, the second boundary line K2, the third boundary line K3, and the fourth boundary line K4.

On the basis of the foregoing, referring back to FIG. 5, the second end D2 is closer to a screen 10 than the first end D1 in a direction perpendicular to the screen 10 (that is, the Z-axis direction). That is, a distance from the second end D2 to the screen 10 is less than a distance from the first end D1 to the screen 10 in the Z-axis direction.

On the basis of the foregoing, still referring to FIG. 5, two ends of the second channel segment 42 are respectively a third end D3 and a fourth end D4, and the third end D3 is connected to the second end D2. The second channel segment 42 extends in a direction away from the screen 10 from the third end D3 to the fourth end D4. The fourth end D4 runs through a surface that is of the middle frame A and that faces away from the screen 10, to form an inner end opening of the sound pickup channel 40.

Based on this, referring to FIG. 5, a MIC 30 is located on a side that is of the middle frame A and that faces away from the screen 10. Specifically, the MIC 30 may be located in an accommodating cavity C. A sound pickup hole 30a of the MIC 30 is communicated with the fourth end D4.

In this way, a sound signal outside the electronic device 100 can enter the MIC 30 through the sound pickup channel 40, to be picked up by the MIC 30. The second end D2 is closer to the screen 10 than the first end D1, and the third end D3 of the second channel segment 42 is connected to the second end D2. In this way, the second channel segment 42 can be closer to the screen 10 while it is ensured that the outer end opening of the sound pickup channel 40 is centrally arranged on the outer side surface m1 in the Z-axis direction; and a thickness of the middle frame A can be reduced on the premise that a length of the second channel segment 42 in the Z-axis direction is constant, to facilitate thinning of the electronic device. Therefore, thinning of the electronic device 100 can be implemented while the outer end opening is centrally disposed.

The middle frame A serves as a supporting "skeleton" in the electronic device 100, and is configured to support the screen 10 and electronic components in the accommodating cavity C. Therefore, hardness of the middle frame A affects overall structural strength of the electronic device 100. Based on this, after the thickness of the middle frame A is reduced, in order to ensure structural strength of the middle frame A, in some embodiments, the middle frame A may be a metal middle frame, and a material of the metal middle frame does not include but is not limited to stainless steel, aluminum alloy, magnesium alloy, and titanium alloy. The metal material has large hardness, so that the structural strength of the middle frame A and even the electronic device 100 can be ensured on the premise that the middle frame A is thinned, to prevent deformation.

An extending path of the first channel segment 41 includes but is not limited to a straight path, a polyline path, a curve path, and a path in which some sections are straight paths and other sections are curve paths, provided that the second end D2 is closer to the screen 10 than the first end D1.

In addition, in the Z-axis direction, some middle sections of the first channel segment 41 may be closer to the screen 10 than the second end D2, or may be farther away from the screen 10 than the first end D1.

In some embodiments, referring to FIG. 5, the first channel segment 41 approaches the screen 10 from the first end D1 to the second end D2. That is, in any two adjacent middle sections on the extending path of the first channel segment 41, a middle section closer to the first end D1 is a first section, and a middle section closer to the second end D2 is a second section. The second section is flush with the first section. Alternatively, the second section is closer to the screen 10 than the first section in the Z-axis direction. "Flush" means that distances from the two sections to the screen 10 in the Z-axis direction are approximately equal.

In this way, the first channel segment 41 is short, so that a peak frequency fh of the MIC 30 can be increased, an operating frequency band of the MIC 30 can be improved, and high-frequency performance of the MIC 30 can be enhanced. In addition, the first channel segment 41 has a simpler structure and is more convenient to process.

In the foregoing embodiment, the first channel segment 41 may continuously approach the screen 10 or may approach the screen 10 in a step-wise manner from the first end D1 to the second end D2.

In some embodiments, referring to FIG. 5, the first channel segment 41 may extend along a straight line, and the first channel segment 41 is inclined toward the screen 10 from the first end D1 to the second end D2. In this way, the first channel segment 41 continuously approaches the screen 10 from the first end D1 to the second end D2, so that the sound pickup channel 40 has a simple shape and is easy to process. In addition, the first channel segment 41 is as short as possible, so that a peak frequency fh of the MIC 30 can be increased, an operating frequency band of the MIC 30 can be improved, and high-frequency performance of the MIC 30 can be enhanced.

Referring to FIG. 5, an inclination angle θ1 of the first channel segment 41 toward the screen 10 may be greater than or equal to 0° and less than or equal to 60°. Specifically, the inclination angle θ may be 0°, 5°, 10°, 15°, 20°, 25°, 30°, 35°, 40°, 45°, 50°, 55°, or 60°.

In this way, a height of the first channel segment 41 in the Z-axis direction is small on the premise that a length of the first channel segment 41 in the Y-axis direction is constant, to facilitate thinning of the middle frame A and even the electronic device 100.

In some other embodiments, in order to make the first channel segment 41 continuously approach the screen 10, the first channel segment 41 may alternatively extend along an arc, and the arc may be arched toward the screen 10, or may be arched toward a back cover B. This is not specifically limited in this application.

The first channel segment 41 and the second channel segment 42 may be disposed in the middle frame A; or one part of the first channel segment 41 and the second channel segment 42 may be disposed in the middle frame A, and the other part may be disposed between the middle frame A and the screen 10. FIG. 5 is described by using an example in which both the first channel segment 41 and the second channel segment 42 are disposed in the middle frame A.

Specifically, still referring to FIG. 5, the middle frame A includes a middle plate A1 and a frame A2. The frame A2 is disposed on an edge of the middle plate A1, and a surface that is of the frame A2 and that faces away from the middle plate A1 forms the outer side surface m1.

Still referring to FIG. 5, in the direction perpendicular to the screen 10, a surface that is of the frame A2 and that faces away from the screen 10 is a first surface m2, and a surface that is of the middle plate A1 and that faces away from the screen 10 is a second surface m3. A distance from the first surface m2 to the screen 10 is greater than a distance from the second surface m3 to the screen 10. In this way, on the side that is of the middle frame A and that faces away from the screen 10, the middle plate A1 and the frame A2 enclose a groove, and an opening is formed on a side that is of the groove and that faces away from the screen 10. The back cover B covers the opening to enclose the accommodating cavity C together with the middle plate A1 and the frame A2. In this way, there is no need to dispose a side frame on an edge of the back cover B, so that a structure of the back cover B can be simplified.

On the basis of the foregoing, referring to FIG. 5, one part of the first channel segment 41 is disposed in the frame A2, and the other part of the first channel segment 41 and the second channel segment 42 are disposed in the middle plate A1.

The sound pickup channel 40 has a proper layout and a simple structure.

On the basis of the foregoing, referring to FIG. 5, a surface that is of the frame A2 and that faces the accommodating cavity C is a third surface m4, the third surface m4 is connected between the first surface m2 and the second surface m3, and a corner position between the third surface m4 and the second surface m3 is a position P.

Based on this, a distance from the first channel segment 41 to the position P affects a forming yield of the first channel segment 41, and the thickness of the middle frame A or an accommodating capability of the accommodating cavity C.

Specifically, a shorter distance between the first channel segment 41 and the position P indicates less material of a partial middle frame between the first channel segment 41 and the position P and lower structural strength. In a process in which the first channel segment 41 is formed by using a drilling process, the middle frame is prone to a problem of partial perforation or deformation, and therefore a processing yield is low.

However, in order to ensure the yield, the distance between the first channel segment 41 and the position P needs to be increased. In this case, the second surface m3 needs to be moved downward, or the third surface m4 needs to be moved into the accommodating cavity C. Therefore, a thickness of the middle plate A1 and a thickness of the frame A2 are increased. This does not facilitate thinning of the middle frame A. Alternatively, a volume of the accommodating cavity C is compressed. This reduces the accommodating capacity of the accommodating cavity C.

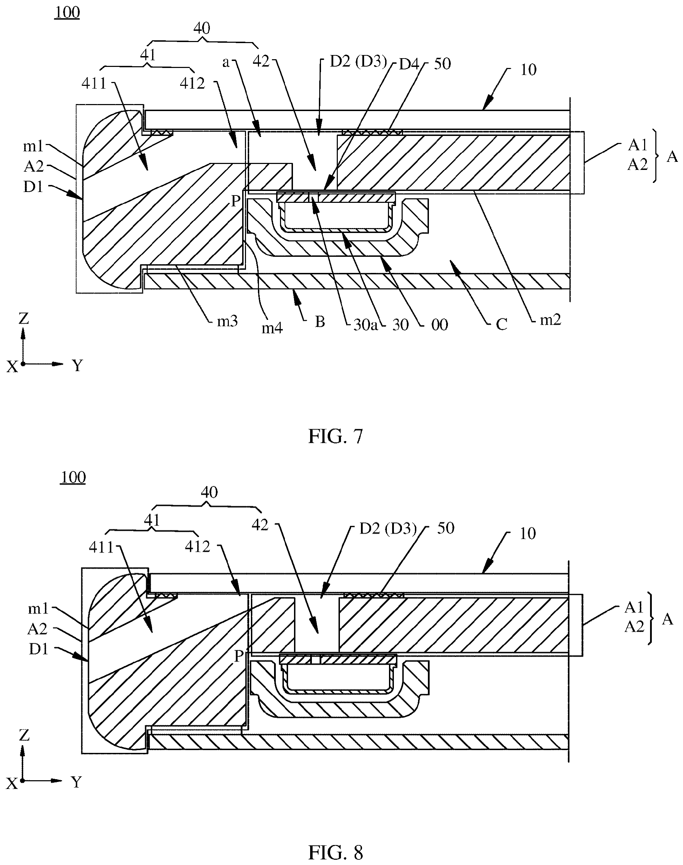

In order to resolve the foregoing problems, referring to FIG. 7, FIG. 7 is a schematic diagram of a cross-sectional structure of an electronic device 100 according to some other embodiments of this application. In this embodiment, a first channel segment 41 includes a first straight channel segment 411 and a second straight channel segment 412.

The first straight channel segment 411 extends from an outer side surface m1 of a middle frame A toward a middle part of the middle frame A, and is inclined toward a screen 10.

The second straight channel segment 412 is connected between an end that is of the first straight channel segment 411 and that faces the screen 10 and a third end D3, and the second straight channel segment 412 is parallel to the screen 10.

In this way, referring to FIG. 7, from a first end D1 to a second end D2, the first channel segment 41 is in an arched state in a direction away from a position P, thereby increasing a distance between the first channel segment 41 and the position P, so that a forming yield of the first channel segment 41 can be ensured, and thicknesses of a middle plate A1 and a frame A2 do not need to be increased, thereby facilitating thinning of the middle frame A and even the electronic device, and ensuring an accommodating capacity of an accommodating cavity C.

In the foregoing embodiment, the first straight channel segment 411, the second straight channel segment 412, and a second channel segment 42 may all be disposed in the middle frame A; or one part of the first straight channel segment 411, the second straight channel segment 412, and the second channel segment 42 may be disposed in the middle frame A, and the other part may be disposed between the screen 10 and the middle frame A. The embodiment shown in FIG. 7 is described by using an example in which the first straight channel segment 411, the second straight channel segment 412, and the second channel segment 42 are all disposed in the middle frame A. This cannot be considered as a special limitation on this application.

On the basis of the foregoing embodiment, optionally, referring to FIG. 7, the first straight channel segment 411 may be disposed in the frame A2, and at least a part of the second straight channel part 412 may be disposed in the middle plate A1. Specifically, one part of the second straight channel part 412 may be disposed in the middle plate A1, and the other part may be disposed in the frame A2. This layout is proper and easy to implement.

In some other embodiments, referring to FIG. 8, FIG. 8 is a schematic diagram of a cross-sectional structure of an electronic device 100 according to some other embodiments of this application. In this embodiment, a first straight channel segment 411 is disposed in a middle frame A. Specifically, at least a part of the first straight channel segment 411 may be disposed in a frame A2. An end that is of the first straight channel segment 411 and that faces a screen 10 runs through a surface that is of the middle frame A and that faces the screen 10. A second channel segment 42 is also disposed in the middle frame A. Specifically, the second channel segment 42 may be disposed in a middle plate A1. A third end D3 of the second channel segment 42 runs through the surface that is of the middle frame A and that faces the screen 10.

On the basis of the foregoing, still referring to FIG. 8, the electronic device 100 further includes a sealing ring 50. A material of the sealing ring 50 includes but is not limited to dispensed glue, back adhesive, foam, nitrile rubber, silicone rubber, and fluorine rubber. The sealing ring 50 is disposed between the screen 10 and the middle frame A, and a region surrounded by the sealing ring 50 forms a second straight channel segment 412. In this way, a thickness of the middle frame A can be further reduced on the premise that a length of the second channel segment 42 in a Z-axis direction is constant, to facilitate thinning of the electronic device 100.

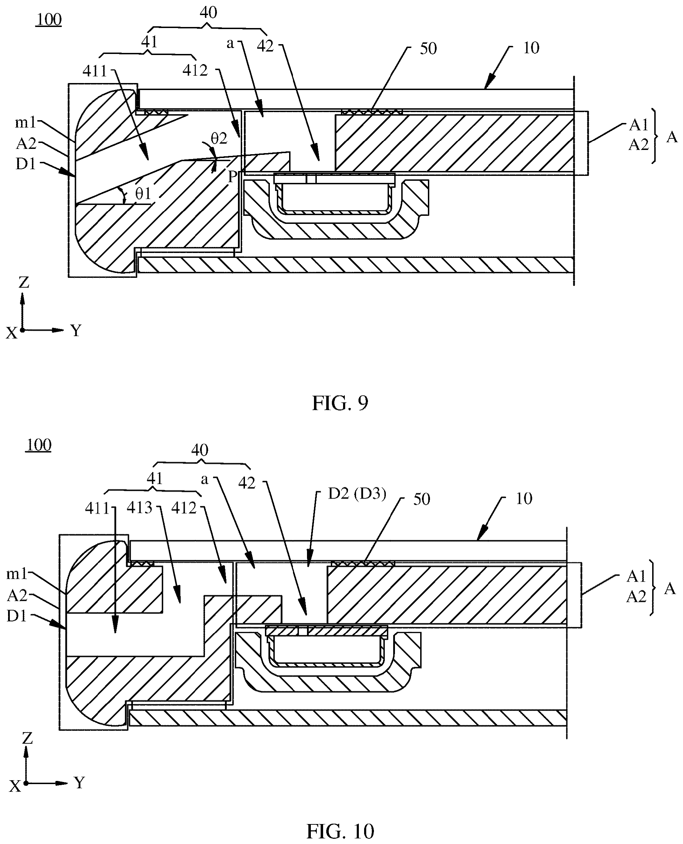

In some other embodiments, referring to FIG. 9, FIG. 9 is a schematic diagram of a cross-sectional structure of an electronic device 100 according to some other embodiments of this application. A difference between this embodiment and the embodiment shown in FIG. 7 is that: in this embodiment, a second straight channel segment 412 is inclined toward a screen 10 from a first straight channel segment 411 to a second channel segment 42, and an inclination angle θ2 of the second straight channel segment 412 relative to the screen 10 is less than an inclination angle θ1 of the first straight channel segment 411 relative to the screen 10.

In this way, a first channel segment 41 is also in an arched state in a direction away from a position P, thereby increasing a distance between the first channel segment 41 and the position P, so that a forming yield of the first channel segment 41 can be ensured, and thicknesses of a middle plate A1 and a frame A2 do not need to be increased, thereby facilitating thinning of a middle frame A and even the electronic device, and ensuring an accommodating capacity of an accommodating cavity C.

In the foregoing embodiment, the first straight channel segment 411, the second straight channel segment 412, and the second channel segment 42 may all be disposed in the middle frame A; or one part of the first straight channel segment 411, the second straight channel segment 412, and the second channel segment 42 may be disposed in the middle frame A, and the other part may be disposed between the screen 10 and the middle frame A. For example, the first straight channel segment 411 and the second channel segment 42 are disposed in the middle frame A, and the second straight channel segment 412 is formed by being surrounded by a sealing ring disposed between the screen 10 and the middle frame A. The embodiment shown in FIG. 9 is described by using an example in which the first straight channel segment 411, the second straight channel segment 412, and the second channel segment 42 are all disposed in the middle frame A. This cannot be considered as a special limitation on this application.

In some other embodiments, referring to FIG. 10, FIG. 10 is a schematic diagram of a cross-sectional structure of an electronic device 100 according to some other embodiments of this application. In this embodiment, a first channel segment 41 includes a first straight channel segment 411, a second straight channel segment 412, and a third straight channel segment 413.

The first straight channel segment 411 extends from an outer side surface m1 of a middle frame A toward a middle part of the middle frame A.

The third straight channel segment 413 extends from an end that is of the first straight channel segment 411 and that faces the middle part of the middle frame A toward a screen 10.

The second straight channel segment 412 extends from an end that is of the third straight channel segment and that faces the screen 10 toward the middle part of the middle frame A.

In this way, referring to FIG. 10, the first channel segment 41 approaches the screen 10 in a step-wise manner from a first end D1 to a second end D2, so that a distance between the first channel segment 41 and a position P can also be increased on the premise of ensuring that a thickness of a middle plate A1 is constant, thereby ensuring a forming yield of the first channel segment 41.

In the foregoing embodiment, the first straight channel segment 411, the second straight channel segment 412, the third straight channel segment 413, and a second channel segment 42 may all be disposed in the middle frame A; or one part of the first straight channel segment 411, the second straight channel segment 412, the third straight channel segment 413, and the second channel segment 42 may be disposed in the middle frame A, and the other part may be disposed between the screen 10 and the middle frame A. The embodiment shown in FIG. 10 is described by using an example in which the first straight channel segment 411, the second straight channel segment 412, the third straight channel segment 413, and the second channel segment 42 are all disposed in the middle frame A. This cannot be considered as a special limitation on this application.

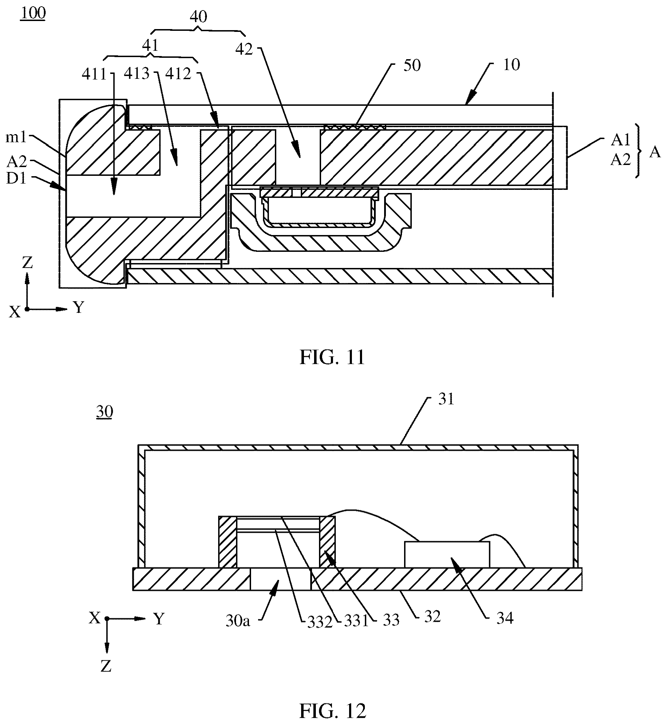

In some other embodiments, referring to FIG. 11, FIG. 11 is a schematic diagram of a cross-sectional structure of an electronic device 100 according to some other embodiments of this application. In this embodiment, a first straight channel segment 411 and a third straight channel segment 413 are disposed in a middle frame A. Specifically, at least a part of the first straight channel segment 411 and the third straight channel segment 413 may be disposed in a frame A2. An end that is of the third straight channel segment 413 and that faces a screen 10 runs through a surface that is of the middle frame A and that faces the screen 10. A second channel segment 42 is also disposed in the middle frame A. Specifically, the second channel segment 42 may be disposed in a middle plate A1. A third end D3 of the second channel segment 42 runs through the surface that is of the middle frame A and that faces the screen 10.

On the basis of the foregoing, still referring to FIG. 11, the electronic device 100 further includes a sealing ring 50. A material of the sealing ring 50 includes but is not limited to dispensed glue, back adhesive, foam, nitrile rubber, silicone rubber, and fluorine rubber. The sealing ring 50 is disposed between the screen 10 and the middle frame A, and a region surrounded by the sealing ring 50 forms a second straight channel segment 412. In this way, a thickness of the middle frame A can be further reduced on the premise that a length of the second channel segment 42 in a Z-axis direction is constant, to facilitate thinning of the electronic device 100.

On the basis of the embodiment shown in FIG. 7, FIG. 9, or FIG. 10, the second straight channel segment 412 can run through the surface that is of the middle frame A and that faces the screen 10, to form an opening a, and the screen 10 covers the opening a.

In this way, the screen 10 forms a side wall of the second straight channel segment 412, so that the thickness of the middle plate A1 can be further reduced on the premise of ensuring a height of the second straight channel segment 412 in the Z-axis direction and the distance from the first channel segment 41 to the position P, to facilitate thinning of the middle frame A and even the electronic device 100.

In addition, difficulty in disposing a sound pickup channel 40 can be simplified by using the opening a. Specifically, the sound pickup channel 40 may be processed by using a computer numerical control (computer numerical control, CNC), and operations such as drilling and milling can be performed by using the computer numerical control.

For example, for a sound pickup channel 40 in the electronic device 100 shown in FIG. 7, first, a hole may be drilled from the outer side surface m1 of the middle frame A toward the middle part of the middle frame A to form the first straight channel segment 411; then, the second straight channel segment 412 may be milled, by using a milling process, out from a surface that is of the middle frame A and that is used to be connected to the screen 10, and an end that is of the second straight channel segment 412 and that faces the outer side surface m1 is made to be communicated with the first straight channel segment 411; and finally, a hole may be drilled from a bottom surface of an end that is of the second straight channel segment 412 and that is away from the outer side surface m1 toward a surface that is of the middle frame A and that faces away from the screen 10, to form the second channel segment 42. This operation is simple and easy to implement.

A forming manner of a sound pickup channel 40 in the electronic device 100 shown in FIG. 9 may be the same as the forming manner of the sound pickup channel 40 in the electronic device 100 shown in FIG. 7, and details are not described herein again.

For another example, for a sound pickup channel 40 in the electronic device 100 shown in FIG. 10, first, a hole may be drilled from the outer side surface m1 of the middle frame A toward the middle part of the middle frame A to form the first straight channel segment 411; next, the second straight channel segment 412 may be milled, by using a milling process, out from a surface that is of the middle frame A and that is used to be connected to the screen 10; then, a hole may be drilled from a bottom surface of an end that is of the second straight channel segment 412 and that faces the outer side surface m1 toward the first straight channel segment 411 to form the third straight channel segment 413; and finally, a hole may be drilled from a bottom surface of an end that is of the second straight channel segment 412 and that is away from the outer side surface m1 toward a surface that is of the middle frame A and that faces away from the screen 10, to form the second channel segment 42. This operation is simple and easy to implement.

On the basis of the foregoing, optionally, still referring to FIG. 7, FIG. 9, or FIG. 10, a sealing ring 50 is disposed between the screen 10 and the middle frame A. A material of the sealing ring 50 includes but is not limited to dispensed glue, back adhesive, foam, nitrile rubber, silicone rubber, and fluorine rubber. The sealing ring 50 is disposed around the opening a. In this way, air tightness of the second straight channel segment 412 can be ensured.

On the basis of any one of the foregoing embodiments, the second channel segment 42 may extend along a straight line, or may extend along a curve or a polyline. When the second channel segment 42 extends along a straight line, the second channel segment 42 may extend in the Z-axis direction, or may be inclined relative to the Z-axis direction. This application is described by using an example in which the second channel segment 42 extends along a straight line in the Z-axis direction. This cannot be considered as a special limitation on this application.

The foregoing embodiments describe a structure of the sound pickup channel 40. The following describes an internal structure of the accommodating cavity C. The internal structure of the accommodating cavity C may be combined with the sound pickup channel 40 described in any one of the foregoing embodiments. The following is described by using an example in which the internal structure of the accommodating cavity C is combined with the sound pickup channel 40 in the electronic device 100 shown in FIG. 7. This cannot be considered as a special limitation on this application.

According to the foregoing description, referring to FIG. 7, a MIC 30 is disposed in the accommodating cavity C, the MIC 30 has a sound pickup hole 30a, and the sound pickup hole 30a is communicated with a fourth end D4 of the sound pickup channel 40.

The MIC 30 may have various structural forms. In some embodiments, the MIC 30 may be a micro-electro-mechanical system (micro-electro-mechanical system, MEMS) microphone. The MEMS microphone may have, for example, the following structure.

Referring to FIG. 12, FIG. 12 is a schematic diagram of a cross-sectional structure of a MIC 30 in an electronic device 100 according to some embodiments of this application. The MIC 30 includes a casing 31, a substrate 32, a microphone chip 33, and an integrated circuit 34.

A sound pickup hole 30a is disposed on the substrate 32, the casing 31 and the substrate 32 enclose a cavity, and the cavity is communicated with the sound pickup hole 30a. The microphone chip 33 and the integrated circuit 34 are fastened to the substrate 32, and are located in the cavity.

The microphone chip 33 includes a back plate 331 and a diaphragm 332. The back plate 331 and the diaphragm 332 are disposed in parallel with and spaced apart from each other to form a parallel-plate capacitor. An end that is of the microphone chip 33 and that is opposite to the parallel-plate capacitor is of an opening structure, and the opening structure is communicated with the sound pickup hole 30a. The integrated circuit 34 is electrically connected to the microphone chip 33.

In this way, a sound signal entering through the sound pickup channel 40 can enter the microphone chip 33 through the sound pickup hole 30a, causing the diaphragm 332 to vibrate, so that a capacitance of the parallel-plate capacitor is changed, and the integrated circuit 34 outputs an electrical signal, thereby implementing sound-to-electrical conversion.

The MIC 30 is a bottom-opening MEMS microphone. This structure is simple and is easy to process.

Referring to FIG. 7, the sound pickup hole 30a may be opposite to and directly communicated with the fourth end D4. This structure is simple, and a moving path along which a sound signal enters the MIC 30 through the sound pickup channel 40 is short, so that a peak frequency fh of the MIC 30 can be increased, an operating frequency band of the MIC 30 can be improved, and high-frequency performance of the MIC 30 can be enhanced.

In another embodiment, another structure may alternatively be disposed between the sound pickup hole 30a and the fourth end D4. A communication channel is disposed in the another structure, and the sound pickup hole 30a is communicated with the fourth end D4 through the communication channel.

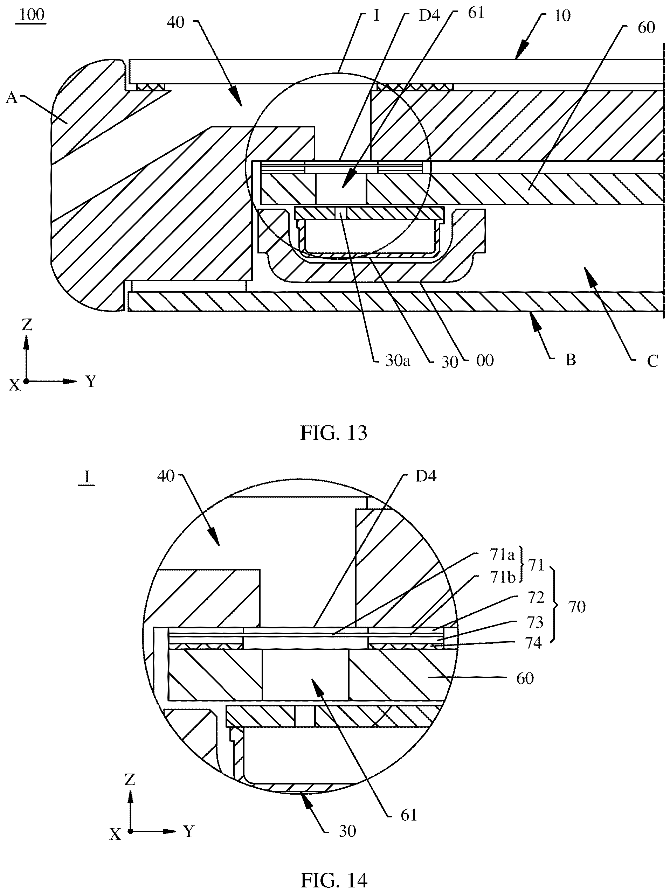

For example, referring to FIG. 13, FIG. 13 is a schematic diagram of a cross-sectional structure of an electronic device 100 according to some other embodiments of this application. In this embodiment, the electronic device 100 further includes a circuit board 60.

The circuit board 60 is located on a side that is of the middle frame A and that faces away from the screen 10, and the circuit board 60 may be located in the accommodating cavity C. A first through hole 61 is disposed in the circuit board 60, and the first through hole 61 may be a circular hole, an oval hole, a square hole, a triangular hole, or the like. This is not specifically limited in this application. The first through hole 61 is opposite to and communicated with the fourth end D4.

Based on this, referring to FIG. 13, the MIC 30 may be disposed on the circuit board 60, and the sound pickup hole 30a is communicated with the first through hole 61.

In this way, the MIC 30 can be conveniently electrically connected to another electronic component such as a controller or a memory by using the circuit board 60. Based on this, the first through hole 61 is disposed in the circuit board 60, the first through hole 61 is made to be opposite to and communicated with the fourth end D4, and the sound pickup hole 30a is made to be communicated with the first through hole 61. This layout is proper, and can improve layout compactness of electronic components in the electronic device.

On the basis of the foregoing embodiment, in order to prevent a foreign object (such as dust or debris) outside the electronic device 100 from entering the MIC 30 along the sound pickup channel 40, in some embodiments, referring to FIG. 14, FIG. 14 is a partial enlarged view of a region I in the electronic device 100 shown in FIG. 13, and a dustproof mesh 70 is disposed between the middle frame A and the circuit board 60.

The dustproof mesh 70 includes a mesh body 71, and a material of the mesh body 71 includes but is not limited to metal and plastic. At least a part of the mesh body 71 is located between the fourth end D4 and the first through hole 61.

In this way, a foreign object outside the electronic device 100 can be prevented, by using the dustproof mesh 70, from entering the MIC 30 along the sound pickup channel 40, thereby ensuring performance of the MIC 30 and prolonging a life span.

In the foregoing embodiment, in order to ensure air tightness at the dustproof mesh 70, in some embodiments, still referring to FIG. 14, the mesh body 71 includes a middle part 71a and an edge part 71b surrounding the middle part 71a. The middle part 71a is located between the fourth end D4 and the first through hole 61.

On the basis of the foregoing, the dustproof mesh 70 further includes a first sealant layer 72, a second sealant layer 73, and an elastic sealing layer 74.

The first sealant layer 72 is bonded between the edge part 71b and the middle frame A, the second sealant layer 73 is bonded between the edge part 71b and the elastic sealing layer 74, and the elastic sealing layer 74 is located between the second sealant layer 73 and the circuit board 60.

The circuit board 60 may be fastened to the middle frame A by using a connector such as a screw, to squeeze the elastic sealing layer 74 and make the elastic sealing layer 74 in a compressed state, so as to implement sealing and ensure air tightness at the dustproof mesh 70.

In the foregoing embodiment, referring back to FIG. 13, the MIC 30 may be located on a side that is of the circuit board 60 and that faces away from the second channel segment 42, and the sound pickup hole 30a of the MIC 30 is opposite to and communicated with the first through hole 61. This structure is simple, and a moving path along which a sound signal enters the MIC 30 through the sound pickup channel 40 and the first through hole 61 is short, so that a peak frequency fh of the MIC 30 can be increased, an operating frequency band of the MIC 30 can be improved, and high-frequency performance of the MIC 30 can be enhanced.

In some embodiments, another structure may alternatively be disposed between the sound pickup hole 30a of the MIC 30 and the first through hole 61. A communication channel is disposed in the another structure, and the sound pickup hole 30a is communicated with the first through hole 61 through the communication channel.

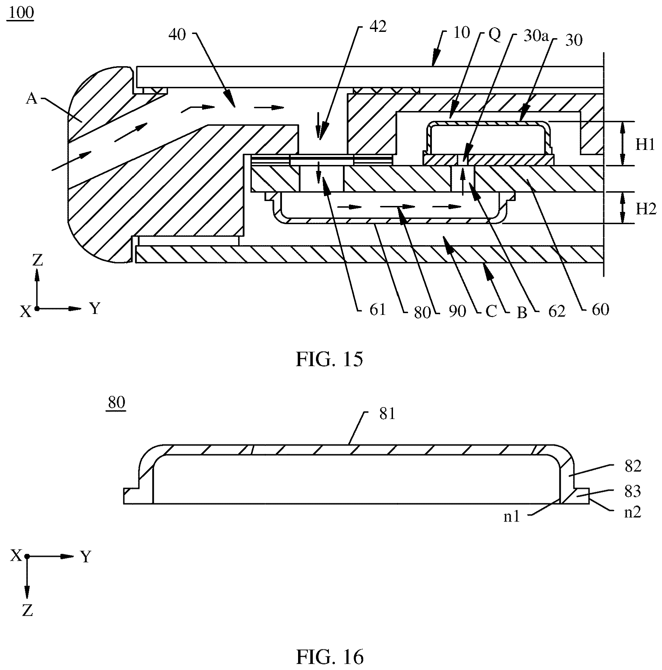

For example, referring to FIG. 15, FIG. 15 is a schematic diagram of a cross-sectional structure of an electronic device 100 according to some other embodiments of this application. In this embodiment, a second through hole 62 is further disposed in the circuit board 60, and the second through hole 62 includes but is not limited to a circular hole, an oval hole, a square hole, a triangular hole, a pentagonal hole, or the like.

The second through hole 62 is spaced apart from the first through hole 61. Referring to FIG. 15, the MIC 30 and the second channel segment 42 are located on a same side of the circuit board 60, and the sound pickup hole 30a of the MIC 30 is opposite to and communicated with the second through hole 62.

On the basis of the foregoing, the electronic device 100 further includes a sealing hood 80. The sealing hood 80 is located on a side that is of the circuit board 60 and that faces away from the MIC 30 and the second channel segment 42, and the sealing hood 80 and the circuit board 60 enclose an air flow cavity 90, and the air flow cavity 90 is communicated with both the first through hole 61 and the second through hole 62.

In this way, the first through hole 61, the air flow cavity 90, and the second through hole 62 form a U-shaped channel connected between the sound pickup channel 40 and the sound pickup hole 30a, so that a sound signal outside the electronic device 100 can be transmitted to the MIC 30 through the sound pickup channel 40 and the U-shaped channel in sequence (as shown by arrows in FIG. 15), and the sound signal is further converted into an electrical signal by using the MIC 30.

In addition, a height of the sealing hood 80 may be less than a height of the MIC 30 in a direction perpendicular to the circuit board 60, that is, in the Z-axis direction. Therefore, compared with the solution shown in FIG. 13, this solution helps reduce a stacking thickness of a complete machine, thereby implementing thinning of the electronic device 100.

In addition, because the MIC 30 and the second channel segment 42 are located on the same side of the circuit board 60, the second channel segment 42 is disposed on the middle plate A1, and a back cover B and the middle plate A1 are respectively located on two opposite sides of the circuit board 60, the MIC 30 and the back cover B are respectively located on the two opposite sides of the circuit board 60. Therefore, the MIC 30 can be protected by using the circuit board 60, to prevent the MIC 30 from being damaged by an external force from the back cover B, thereby eliminating a need to specially dispose a protective cover for the MIC 30.

In some embodiments, referring to FIG. 15, an avoidance groove Q is disposed on the surface that is of the middle frame A and that faces away from the screen 10, and the MIC 30 is accommodated in the avoidance groove Q. In this way, the avoidance groove Q is disposed, so that the circuit board 60 can be closer to the middle frame A, and thickness superposition of the MIC 30 and the middle frame A is avoided, to reduce a thickness of the electronic device 10, thereby helping improve portability and a use hand feel of the electronic device 100.

In some embodiments, referring to FIG. 15, the height H2 of the sealing hood 80 may be less than the height H1 of the MIC 30 in the direction perpendicular to the circuit board 60, that is, in the Z-axis direction.

In this way, a stacking height of electronic components located on a side that is of the middle plate A1 and that faces away from the screen 10 can be reduced. Compared with the solution shown in FIG. 13, this solution helps reduce the stacking thickness of the complete machine, thereby implementing thinning of the electronic device 100, and improving portability and a use hand feel of the electronic device 100.

In some embodiments, referring to FIG. 15, the height H2 of the sealing hood 80 may be greater than or equal to 0.4 mm and less than or equal to 0.9 mm in the direction perpendicular to the circuit board 60. Specifically, the height H2 of the sealing hood 80 may be 0.4 mm, 0.5 mm, 0.6 mm, 0.7 mm, 0.8 mm, or 0.9 mm.

In this way, the height H2 of the sealing hood 80 is moderate, so that a height of the air flow cavity 90 can be ensured while a thickness of the complete machine is reduced, to increase a peak frequency fh of the MIC 30, improve an operating frequency band of the MIC 30, and enhance high-frequency performance of the MIC 30.

In some embodiments, still referring to FIG. 15, a wall thickness of the sealing hood 80 may be greater than or 0.08 mm and less than or equal to 0.3 mm. Specifically, the wall thickness of the sealing hood 80 may be 0.08 mm, 0.1 mm, 0.15 mm, 0.18 mm, 0.2 mm, 0.25 mm, 0.28 mm, or 0.3 mm.

In this way, the wall thickness of the sealing hood 80 is moderate, so that the height of the air flow cavity 90 can be ensured while structural strength of the sealing hood 80 is ensured, to increase a peak frequency fh of the MIC 30, improve an operating frequency band of the MIC 30, and enhance high-frequency performance of the MIC 30.

In some embodiments, a material of the sealing hood 80 may be metal. Specifically, the metal includes but is not limited to iron, iron alloy, copper, copper alloy, aluminum, or aluminum alloy. The metal has large hardness, so that the wall thickness of the sealing hood 80 can be reduced on the premise of ensuring the structural strength of the sealing hood 80, to help increase the height of the air flow cavity 90 while reducing the height of the sealing hood 80.

In another embodiment, the material of the sealing hood 80 may alternatively be plastic. Specifically, the plastic includes but is not limited to polycarbonate (polycarbonate, PC), PC + glass fiber, and ABS plastic (acrylonitrile butadiene styrene plastic). The plastic has low forming difficulty and a low price, thereby helping save costs.

The following embodiments are described on the basis that the material of the sealing hood 80 is metal. This cannot be considered as a special limitation on this application.

On the basis of the foregoing embodiment, the sealing hood 80 may be in a shape of a spherical housing, a cylindrical housing, or the like.

In some embodiments, referring to FIG. 16, FIG. 16 is a schematic diagram of a cross-sectional structure of the sealing hood 80 in the electronic device 100 shown in FIG. 15. The sealing hood 80 includes a top plate 81, a side plate 82, and an annular bottom plate 83. The side plate 82 is disposed along an edge periphery of the top plate 81. The annular bottom plate 83 is connected to an end that is of the side plate 82 and that is away from the top plate 81, and the annular bottom plate 83 is connected to the circuit board 60 in FIG. 15.

In this way, the sealing hood 80 is approximately of a cylindrical-housing-shaped structure, and the structure is simple. In addition, large space can be formed inside the sealing hood 80 on the premise that the height of the sealing hood 80 in the Z-axis direction is constant, to ensure a volume of the air flow cavity and increase the peak frequency fh of the microphone 30 when the sealing hood 80 is applied to the electronic device 10.

In the foregoing embodiment, the side plate 82 may be perpendicular to the top plate 81, and the annular bottom plate 83 may be parallel to the top plate 81. This structure is simple and is easy to process.

In another embodiment, the side plate 82 and the annular bottom plate 83 may alternatively be inclined relative to the top plate 81. This application is described by using an example in which the side plate 82 is perpendicular to the top plate 81, and the annular bottom plate 83 is parallel to the top plate 81. This cannot be considered as a special limitation on this application.

The annular bottom plate 83 may be glued to the circuit board 60, or may be welded to the circuit board 60.

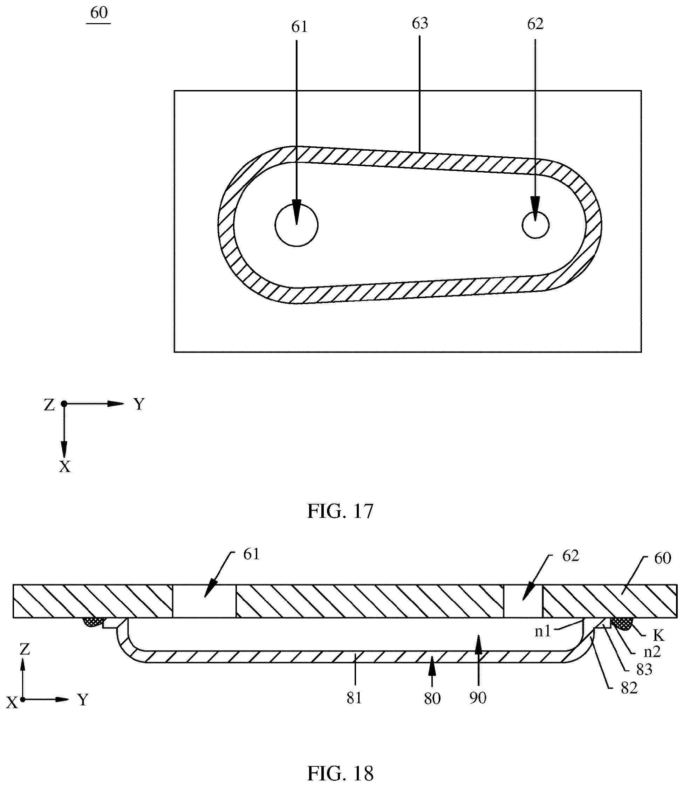

In some embodiments, referring to FIG. 17, FIG. 17 is a bottom view of the circuit board 60 in the electronic device 100 shown in FIG. 15. An annular connecting pad 63 is disposed on the circuit board 60, and the annular bottom plate 83 is welded to the annular connecting pad 63.

In this way, the sealing hood 80 is fastened to the circuit board 60 through welding, so that connection stability is high. In addition, a periphery of the annular bottom plate 83 can be welded to a periphery of the annular connecting pad 63, so that sealing can be implemented to some extent.

In addition, the first through hole 61 and the second through hole 62 may balance air pressure inside and outside the air flow cavity 90, thereby avoiding loose welding of the sealing hood 80 caused by heating air in the air flow cavity 90 in a process of welding the sealing hood 80 to the circuit board 60.

Specifically, the annular bottom plate 83 may be welded to the annular connecting pad 63 by using a surface mounted technology (surface mounted technology, SMT). In this way, welding efficiency can be improved and assembly costs can be reduced.

The top plate 81, the side plate 82, and the annular bottom plate 83 may be integrally formed. Specifically, the integral forming may be implemented by using a metal stamping process, a casting process, or the like. In another embodiment, the top plate 81, the side plate 82, and the annular bottom plate 83 may alternatively be separately formed and fastened in a welding manner or the like. This is not specifically limited in this application.

The annular bottom plate 83 includes an inner edge n1 and an outer edge n2. The inner edge n1 faces a region surrounded by the annular bottom plate 83, and the outer edge n2 is away from the region surrounded by the annular bottom plate 83.

On the basis of the foregoing, optionally, referring back to FIG. 16, an end that is of the side plate 82 and that is away from the top plate 81 is located in the region surrounded by the annular bottom plate 83, and is connected to the inner edge n1. The sealing hood 80 has a simple structure and can be formed through stamping, to help simplify forming difficulty.

In some other embodiments, the end that is of the side plate 82 and that is away from the top plate 81 may alternatively be connected to the outer edge n2 of the annular bottom plate 83, or may be connected to a middle part between the outer edge n2 and the inner edge n1. The following embodiments are further described on the basis that the end that is of the side plate 82 and that is away from the top plate 81 is connected to the inner edge n1. This cannot be considered as a special limitation on this application.

In some embodiments, referring to FIG. 18, FIG. 18 is a schematic diagram of a cross-sectional structure of a connection structure between the sealing hood 80 and the circuit board 60 in the electronic device 100 shown in FIG. 15. A sealant K is disposed on a side that is of the outer edge n2 and that is away from the inner edge n1, and the sealant K is bonded to both the outer edge n2 and the circuit board 60. The sealant K includes but is not limited to dispensed glue.

In this way, the sealing hood 80 can be sealed and reinforced a second time by using the sealant K, to avoid air leakage at a connection gap between the annular bottom plate 83 and the circuit board 60.

In some embodiments, referring back to FIG. 15, a cross-sectional area of the first through hole 61 may be greater than a cross-sectional area of the second through hole 62. In this way, after entering the accommodating cavity C through the sound pickup channel 40, a sound signal can smoothly enter the air flow cavity 90 through the first through hole 61, and enter the sound pickup hole 30a through the second through hole 62. Because a cross-sectional area of the sound pickup hole 30a is small, the cross-sectional area of the second through hole 62 opposite to the sound pickup hole 30a is small. Therefore, a contact area between the circuit board 60 and the substrate 32 of the MIC 30 can be increased to ensure support stability. This layout is proper and has good performance.

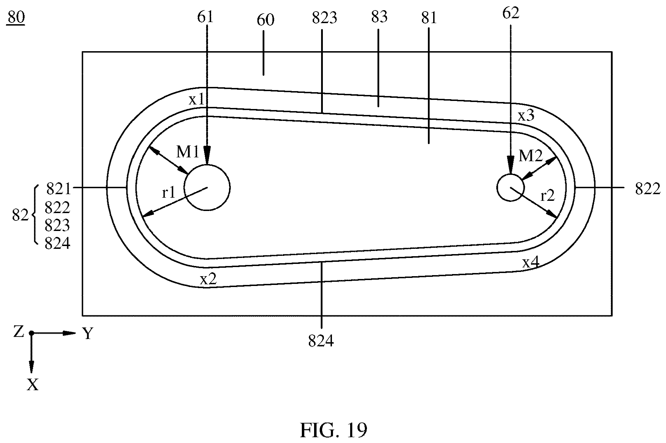

On the basis of the foregoing embodiment, referring to FIG. 19, FIG. 19 is a top view of the sealing hood 80 in the electronic device 100 shown in FIG. 15. In this embodiment, the side plate 82 includes a first arcuate side plate 821, a second arcuate side plate 822, a first transition plate 823, and a second transition plate 824.

The first arcuate side plate 821 is located on a side that is of the first through hole 61 and that is away from the second through hole 62, and extends in a circumferential direction of the first through hole 61. The second arcuate side plate 822 is located on a side that is of the second through hole 62 and that is away from the first through hole 61, and extends in a circumferential direction of the second through hole 62.

A radius r1 of an arcuate inner wall surface of the first arcuate side plate 821 is greater than a radius r2 of an arcuate inner wall surface of the second arcuate side plate 822.

On the basis of the foregoing, still referring to FIG. 19, two end parts of the first arcuate side plate 821 in the circumferential direction of the first through hole 61 are respectively a first end part x1 and a second end part x2, and two end parts of the second arcuate side plate 822 in the circumferential direction of the second through hole 62 are respectively a third end part x3 and a fourth end part x4. The first transition plate 823 is connected between the first end part x1 and the third end part x3, and the second transition plate 824 is connected between the second end part x2 and the fourth end part x4.

In this way, a shape of the sealing hood 80 is approximately a spindle shape. Internal space at one end of a spindle-shaped structure is large, and internal space at the other end is small. The end with the large internal space is communicated with the first through hole 61 with a large diameter, and the end with the small internal space is communicated with the second through hole 62 with a small diameter. This layout is proper, and can help increase the peak frequency fh of the MIC 30 while reducing a volume of the sealing hood 80.

In the foregoing embodiment, the first transition plate 823 and the second transition plate 824 may be flat plates or curved plates.

In some embodiments, referring to FIG. 19, both the first transition plate 823 and the second transition plate 824 are flat plates, and the first transition plate 823 is tangent to the first end part x1 of the first arcuate side plate 821 and the third end part x3 of the second arcuate side plate 822. The second transition plate 824 is tangent to the second end part x2 of the first arcuate side plate 821 and the fourth end part x4 of the second arcuate side plate 822.

In this way, the side plate 82 has a simple structure and is easy to process, to help reduce costs.

In some embodiments, the first through hole 61 and the second through hole 62 may be circular holes. Smoothness of transmission of an acoustic wave air flow in the circular holes is good, so that a sound pickup effect of the MIC 30 is good.

On the basis of the foregoing embodiment, referring to FIG. 19, a center line corresponding to the first arcuate side plate 821 is collinear with a center line of the first through hole 61, and a center line corresponding to the second arcuate side plate 822 is collinear with a center line of the second through hole 62.

In a radial direction of the first through hole 61, a distance between the arcuate inner wall surface of the first arcuate side plate 821 and an inner wall surface of the first through hole 61 is a first distance M1.

In a radial direction of the second through hole 62, a distance between the arcuate inner wall surface of the second arcuate side plate 822 and an inner wall surface of the second through hole 62 is a second distance M2.

The second distance M2 is equal to the first distance M1. It should be noted that, that the second distance M2 is equal to the first distance M1 is not limited to that the second distance M2 is absolutely equal to the first distance M1. When an absolute value of a difference between the second distance M2 and the first distance M1 is in a range of 0 mm-0.1 mm, it may be considered that the second distance M2 is equal to the first distance M1.

In this way, this layout is proper, and can reduce, as much as possible, an area occupied by the sealing hood 80 on the circuit board 60, to help reduce the volume of the air flow cavity 90 in the sealing hood 80, thereby helping increase the peak frequency fh of the MIC 30.

In some embodiments, still referring to FIG. 19, the first distance M1 and the second distance M2 may be greater than or equal to 0.2 mm and less than or equal to 0.5 mm. Specifically, the first distance M1 and the second distance M2 may be 0.2 mm, 0.3 mm, 0.4 mm, or 0.5 mm. In this way, the first distance M1 and the second distance M2 are moderate, so that both the volume of the sealing hood 80 and the peak frequency fh of the MIC 30 can be considered.

In the description of this specification, specific features, structures, materials, or characteristics may be properly combined in any one or more embodiments or examples.

Finally, it should be noted that the foregoing embodiments are only used to describe the technical solutions in this application, but are not used to limit this application. Although this application has been described in detail with reference to the foregoing embodiments, it should be understood by a person of ordinary skill in the art that the technical solutions described in the foregoing embodiments may still be modified, or some technical features thereof may be equivalently replaced. These modifications or replacements do not make the essence of the corresponding technical solutions depart from the spirit and scope of the technical solutions in the embodiments of this application.

## Claims

1. An electronic device, comprising:
a screen, wherein the screen comprises a display surface;
a middle frame, wherein the middle frame is disposed on a side that is of the screen and that faces away from the display surface;
a sound pickup channel, wherein the sound pickup channel is located on the side that is of the screen and that faces away from the display surface, and the sound pickup channel comprises a first channel segment and a second channel segment, wherein
two ends of the first channel segment are respectively a first end and a second end, the first end is located on an outer side surface of the middle frame, the first channel segment extends toward a middle part of the middle frame from the first end to the second end, and the second end is closer to the screen than the first end in a direction perpendicular to the screen; and
two ends of the second channel segment are respectively a third end and a fourth end, the third end is connected to the second end, the second channel segment extends in a direction away from the screen from the third end to the fourth end, and the fourth end runs through a surface that is of the middle frame and that faces away from the screen; and
a microphone, wherein the microphone is located on a side that is of the middle frame and that faces away from the screen, the microphone has a sound pickup hole, and the sound pickup hole is communicated with the fourth end.

2. The electronic device according to claim 1, wherein the first channel segment approaches the screen from the first end to the second end.

3. The electronic device according to claim 2, wherein the first channel segment comprises a first straight channel segment and a second straight channel segment;
the first straight channel segment extends from the outer side surface of the middle frame toward the middle part of the middle frame and is inclined toward the screen, and the second straight channel segment is connected between an end that is of the first straight channel segment and that faces the screen and the third end; and
the second straight channel segment is parallel to the screen; or
the second straight channel segment is inclined toward the screen from the first straight channel segment to the second channel segment, and an inclination angle of the second straight channel segment relative to the screen is less than an inclination angle of the first straight channel segment relative to the screen.

4. The electronic device according to claim 3, wherein the first straight channel segment is disposed in the middle frame, and the end that is of the first straight channel segment and that faces the screen runs through a surface that is of the middle frame and that faces the screen;
the second channel segment is disposed in the middle frame, and the third end of the second channel segment runs through the surface that is of the middle frame and that faces the screen; and
the electronic device further comprises:
a sealing ring, wherein the sealing ring is disposed between the screen and the middle frame, and a region surrounded by the sealing ring forms the second straight channel segment.

5. The electronic device according to claim 3, wherein the first straight channel segment, the second straight channel segment, and the second channel segment are all disposed in the middle frame.

6. The electronic device according to claim 2, wherein the first channel segment comprises a first straight channel segment, a second straight channel segment, and a third straight channel segment;
the first straight channel segment extends from the outer side surface of the middle frame toward the middle part of the middle frame;
the third straight channel segment extends from an end that is of the first straight channel segment and that faces the middle part of the middle frame toward the screen; and
the second straight channel segment extends from an end that is of the third straight channel segment and that faces the screen toward the middle part of the middle frame.

7. The electronic device according to claim 6, wherein the first straight channel segment and the third straight channel segment are disposed in the middle frame, and the end that is of the third straight channel segment and that faces the screen runs through a surface that is of the middle frame and that faces the screen;
the second channel segment is disposed in the middle frame, and the third end of the second channel segment runs through the surface that is of the middle frame and that faces the screen; and
the electronic device further comprises:
a sealing ring, wherein the sealing ring is disposed between the screen and the middle frame, and a region surrounded by the sealing ring forms the second straight channel segment.

8. The electronic device according to claim 6, wherein the first straight channel segment, the second straight channel segment, the third straight channel segment, and the second channel segment are all disposed in the middle frame.

9. The electronic device according to claim 5 or 8, wherein the second straight channel segment runs through a surface that is of the middle frame and that faces the screen, to form an opening, and the screen covers the opening.

10. The electronic device according to claim 9, wherein a sealing ring is disposed between the screen and the middle frame, and the sealing ring is disposed around the opening.

11. The electronic device according to claim 2, wherein the first channel segment and the second channel segment are both disposed in the middle frame; and
the first channel segment extends along a straight line, and the first channel segment is inclined toward the screen from the first end to the second end.

12. The electronic device according to any one of claims 1-11, further comprising:
a circuit board, wherein the circuit board is located on the side that is of the middle frame and that faces away from the screen, a first through hole is disposed in the circuit board, and the first through hole is opposite to and communicated with the fourth end; and
the microphone is disposed on the circuit board, and the sound pickup hole of the microphone is communicated with the first through hole.

13. The electronic device according to claim 12, wherein a dustproof mesh is disposed between the middle frame and the circuit board, the dustproof mesh comprises a mesh body, and at least a part of the mesh body is located between the fourth end and the first through hole.

14. The electronic device according to claim 13, wherein the mesh body comprises a middle part and an edge part surrounding the middle part, and the middle part is located between the fourth end and the first through hole; and
the dustproof mesh further comprises a first sealant layer, a second sealant layer, and an elastic sealing layer, the first sealant layer is bonded between the edge part and the middle frame, the second sealant layer is bonded between the edge part and the elastic sealing layer, and the elastic sealing layer is located between the second sealant layer and the circuit board.

15. The electronic device according to any one of claims 12-14, wherein a second through hole is further disposed in the circuit board, and the second through hole is spaced apart from the first through hole; and the microphone and the second channel segment are located on a same side of the circuit board, and the sound pickup hole of the microphone is opposite to and communicated with the second through hole; and
the electronic device further comprises:
a sealing hood, wherein the sealing hood is located on a side that is of the circuit board and that faces away from the microphone and the second channel segment, the sealing hood and the circuit board enclose an air flow cavity, and the air flow cavity is communicated with both the first through hole and the second through hole.

16. The electronic device according to claim 15, wherein an avoidance groove is disposed on the surface that is of the middle frame and that faces away from the screen, and the microphone is accommodated in the avoidance groove.

17. The electronic device according to claim 15 or 16, wherein a cross-sectional area of the first through hole is greater than a cross-sectional area of the second through hole.

18. The electronic device according to any one of claims 15-17, wherein a height of the sealing hood is less than a height of the microphone in a direction perpendicular to the circuit board.

19. The electronic device according to any one of claims 15-18, wherein a material of the sealing hood is metal.

20. The electronic device according to any one of claims 15-19, wherein the sealing hood comprises a top plate, a side plate, and an annular bottom plate; and
the side plate is disposed along an edge periphery of the top plate, the annular bottom plate is connected to an end that is of the side plate and that is away from the top plate, and the annular bottom plate is connected to the circuit board.

21. The electronic device according to claim 20, wherein the annular bottom plate comprises an inner edge, and the end that is of the side plate and that is away from the top plate is located in a region surrounded by the annular bottom plate and is connected to the inner edge.

22. The electronic device according to claim 21, wherein the annular bottom plate further comprises an outer edge, a sealant is disposed on a side that is of the outer edge and that is away from the inner edge, and the sealant is bonded to both the outer edge and the circuit board.

23. The electronic device according to any one of claims 20-22, wherein the side plate comprises a first arcuate side plate, a second arcuate side plate, a first transition plate, and a second transition plate;
the first arcuate side plate is located on a side that is of the first through hole and that is away from the second through hole and extends in a circumferential direction of the first through hole, the second arcuate side plate is located on a side that is of the second through hole and that is away from the first through hole and extends in a circumferential direction of the second through hole, and a radius of an arcuate inner wall surface of the first arcuate side plate is greater than a radius of an arcuate inner wall surface of the second arcuate side plate;
two ends of the first arcuate side plate in the circumferential direction of the first through hole are respectively a first end part and a second end part, and two ends of the second arcuate side plate in the circumferential direction of the second through hole are respectively a third end part and a fourth end part; and
the first transition plate is connected between the first end part and the third end part, and the second transition plate is connected between the second end part and the fourth end part.

24. The electronic device according to claim 23, wherein both the first transition plate and the second transition plate are flat plates, the first transition plate is tangent to the first end part of the first arcuate side plate and the third end part of the second arcuate side plate, and the second transition plate is tangent to the second end part of the first arcuate side plate and the fourth end part of the second arcuate side plate.

25. The electronic device according to claim 24, wherein both the first through hole and the second through hole are circular holes;
a center line corresponding to the first arcuate side plate is collinear with a center line of the first through hole, and a center line corresponding to the second arcuate side plate is collinear with a center line of the second through hole;
in a radial direction of the first through hole, a distance between the arcuate inner wall surface of the first arcuate side plate and an inner wall surface of the first through hole is a first distance; and in a radial direction of the second through hole, a distance between the arcuate inner wall surface of the second arcuate side plate and an inner wall surface of the second through hole is a second distance; and
the second distance is equal to the first distance.

26. The electronic device according to any one of claims 1-25, wherein the electronic device is a foldable-screen device.
